# EUROPÄISCHE PATENTSCHRIFT

(11) **EP 3 751 107 B1**
(45) Veröffentlichungstag und Bekanntmachung des Hinweises auf die Patenterteilung: **10.04.2024**
(21) Anmeldenummer: 20179402.1
(22) Anmeldetag: 11.06.2020
(51) Int. Cl.: F01N 5/00, F01N 5/02, F02G 5/04, F01K 23/10

(54) **VERBRENNUNGSMOTOR MIT ABGASWÄRMERÜCKGEWINNUNGSSYSTEM SOWIE VERFAHREN ZUR ABGASWÄRMERÜCKGEWINNUNG**
INTERNAL COMBUSTION ENGINE HAVING EXHAUST HEAT RECOVERY SYSTEM AND METHOD FOR EXHAUST HEAT RECOVERY
MOTEUR A COMBUSTION INTERNE AYANT UN SYSTÈME DE RÉCUPÉRATION DE CHALEUR D'ÉCHAPPEMENT ET PROCÉDÉ POUR LA RÉCUPÉRATION DE CHALEUR D'ÉCHAPPEMENT

(30) Priorität: 12.06.2019 DE 102019115909
(43) Veröffentlichungstag der Anmeldung: 16.12.2020
(73) Patentinhaber: VOLKSWAGEN AG, 38440 Wolfsburg (DE)
(72) Erfinder: Semke, Artur, 38446 Wolfsburg (DE); Carstensen, Asmus, 38557 Osloß (DE); Naumann, Hardy, 38442 Wolfsburg (DE); Horn, André, 38104 Braunschweig (DE); Schulenburg, Thomas, 38550 Isenbüttel (DE); Maischik, Thomas, 38173 Sickte (DE)
(74) Vertreter: Gulde & Partner

(56) Entgegenhaltungen:
- WO-A1-2012/125107
- JP-A- 2005 282 363
- US-A1- 2015 000 274
- US-A1- 2017 306 806

## Beschreibung

Die Erfindung betrifft einen Verbrennungsmotor mit einem Abgaswärmerückgewinnungssystem sowie ein Verfahren zur Abgaswärmerückgewinnung gemäß dem Oberbegriff der unabhängigen Patentansprüche.

Bei der Entwicklung von Kraftfahrzeugen mit Verbrennungsmotor wird stets nach weiteren Potentialen gesucht, um den Kraftstoffverbrauch zu minimieren und den Wirkungsgrad zu erhöhen. Da bei konventionellen Verbrennungsmotoren ein signifikanter Anteil der Energie ungenutzt über das Abgas in die Umwelt emittiert wird, sind bei Verbrennungsmotoren Systeme zur Abgaswärmerückgewinnung bekannt, mit denen die im Abgasstrom enthaltene Energie zumindest anteilig nutzbar gemacht werden kann. Dazu ist in der Abgasanlage des Verbrennungsmotors ein Wärmetauscher vorgesehen, über welchen die Abwärme des Verbrennungsmotors auf einen Dampfkreislauf übertragen wird, wobei der Dampfkreislauf eine Turbine oder andere Arbeitsmaschinen wie Kolbenexpander oder Scroll-Expander antreibt, über welche diese Energie als mechanische Antriebsleistung und/oder elektrische Energie nutzbar gemacht wird. Ein System zur Abgaswärmerückgewinnung umfasst in der Regel vier Hauptkomponenten: eine Pumpe, einen Verdampfer, einen Expander und einen Kondensator. Der Kondensator des Abgaswärmerückgewinnungssystems wird in der Regel von Kühlwasser zur Kühlung des Verbrennungsmotors durchströmt. In dem Kondensator wird das Arbeitsmedium des Dampfkreislaufs des Abgaswärmerückgewinnungssystems abgekühlt. Dabei muss die Kühlleistung so hoch sein, dass ein sicherer Phasenübergang von dampfförmig zu flüssig stattfindet und zu jeder Zeit gewährleistet ist.

Entscheidend für den Wirkungsgrad des Clausius-Rankine-Prozesses in dem Abgasrückgewinnungssystem ist eine möglichst große Fläche im zum Prozess gehörigen Temperatur-Entropie-Diagramm. Diese Fläche wird im oberen Bereich über den maximalen Mediendruck und die maximale Temperatur bestimmt. Die Leistung des Expanders in dem Abgasrückgewinnungssystem ist somit abhängig vom Energieangebot der Abwärmequelle. Bei Verbrennungsmotoren ist eine Hauptabwärmequelle das Abgas des Verbrennungsmotors.

Die Leistungsausbeute des Dampfkreisprozesses in dem Abgaswärmerückgewinnungssystem kann gesteigert werden, indem unterschiedliche Wärmequellen miteinander kombiniert werden und die Abwärme zusätzlich zum Abgas von weiteren Abwärmequellen, insbesondere vom Kühlmittelkreislauf des Verbrennungsmotors zur Verfügung gestellt wird. Die Leistungsausbeute kann ferner gesteigert werden, wenn die Kondensation des dampfförmigen Mediums im Dampfkreisprozess in dem Abgaswärmerückgewinnungssystem durch eine möglichst hohe Kühlleistung des Kondensationsvorgangs gewährleistet wird.

Aus der DE 10 2010 023 174 A1 ist ein Abgaswärmerückgewinnungssystem bekannt, welches die Abwärme zweier unterschiedlicher Abwärmequellen, insbesondere die Abwärme des Abgases des Verbrennungsmotors, die Abwärme eines Ladeluftkühlers oder die Abwärme der Motorkühlung nutzt. Diese Abwärme wird zum Erhitzen eines Dampfkreisprozesses in der Abgaswärmerückgewinnung genutzt.

Die DE 10 2014 016 997 A1 offenbart ein Verfahren und Vorrichtungen zum Betrieb einer einoder mehrstufigen Arbeitsmaschine zur Erzeugung mechanischer Arbeit mit mindestens einem Arbeitskreis mit einem wärmeliefernden Wärmeträgerkreislauf zur Nutzung von zwei und mehr Wärmequellen mit unterschiedlich hohen Temperaturen. Es ist vorgesehen, dass im Wärmeträgerkreislauf dieses Arbeitskreises durch die Vorwärmung, Verdampfung und Überhitzung des Arbeitsfluides das Wärmeträgermedium unter die geforderte Rücklauftemperatur der wärmeliefernden Anlage ausgekühlt wird und mindestens eine Wärmequelle mit einer Temperatur höher als der geforderten Rücklauftemperatur genutzt wird, um die Rücklauftemperatur des Wärmekreislaufes in die wärmeliefernde Anlage wieder zu erreichen. Eine Anwendungsmöglichkeit ergibt sich aus der Nutzung der Abgas- und Motorabwärme von Verbrennungsmotoren.

In der EP 3 161 275 B1 wird eine Abwärmerückgewinnungsvorrichtung zur Rückgewinnung von Abwärme vorgeschlagen, die während des Betriebs eines Verbrennungsmotors erzeugt wurde, wobei die Abwärmerückgewinnungsvorrichtung eine Wärmekraftmaschine umfasst.

Es ist vorgesehen, dass eine erste Kühlmittelbereitstellungseinrichtung dazu konfiguriert ist, mit einem Kühlmittelkreislauf der Kühlanordnung des Verbrennungsmotors an einer Position stromabwärts von dem Verbrennungsmotor und stromaufwärts von einem Radiator in der Kühlanordnung des Verbrennungsmotors verbunden zu sein.

JP 2005 - 282 363 A offenbart ein Abgaswärmerückgewinnungssystem für einen Verbrennungsmotor mit einer ersten Energierückgewinnungseinrichtung und einem Niedertemperatur-Rankine-Kreislauf zur weiteren Energierückgewinnung aus der Abwärme des Abgasstroms des Verbrennungsmotors. Dabei ist der Niedertemperatur-Rankine-Kreislauf dazu eingerichtet, die Abwärme eines ersten Kondensators und die Abwärme eines Kühlwasserkreislaufs des Verbrennungsmotors aufzunehmen.

Aus der US 2017 / 0 306 806 A1 ist ein Kühlvorrichtung für ein Abgaswärmerückgewinnungssystem eines Verbrennungsmotors bekannt. Dabei umfasst die Kühlvorrichtung einen ersten Kühlmittelkreislauf und einen zweiten Kühlmittelkreislauf. Eine Kondensatoreinlassleitung leitet Kühlmittel aus einem der Kühlmittelkreisläufe zu einem Kondensator das Abgaswärmerückgewinnungssystems, um die Temperatur des Arbeitsmediums im Kreislauf des Abgaswärmerückgewinnungssystems zu regulieren.

Ferner beschreibt die WO 2012 / 125 107 A1 ein Abgaswärmerückgewinnungssystem für einen Verbrennungsmotor. Das Abgaswärmerückgewinnungssystem umfasst einen Arbeitskreislauf, in welchem ein Arbeitsmedium verdampft und der Dampf durch eine Turbine entspannt wird, sodass mechanische Energie erzeugt wird.

Die US 2015 / 0 000 274 A1 beschreibt ein Abgaswärmerückgewinnungssystem nach einem Rankine-Zyklus für ein Abgassystem eines Verbrennungsmotors. Das Abgaswärmerückgewinnungssystem ist mit einem Kältemittelkreislauf einer Klimaanlage des Kraftfahrzeuges gekoppelt, derart, dass zusätzlich die Abwärme eines Klimakondensators der Klimaanlage genutzt werden kann, um die Temperatur eines Arbeitsmittels des Abgaswärmerückgewinnungssystems zu steigern.

Nachteilig an den bekannten Lösungen ist jedoch, dass ein Aufheizen des Trägermediums für den Dampfkreislauf des Abgaswärmerückgewinnungssystems durch die maximale Kühlwassertemperatur des Verbrennungsmotors begrenzt ist. Dadurch ergibt sich ein im Vergleich zur Abgastemperatur geringes Temperaturniveau. Für mobile Anwendungen in Kraftfahrzeugen wird daher ausschließlich die Abwärme des Abgasstroms des Verbrennungsmotors genutzt.

Aufgabe der Erfindung ist es, den Wirkungsgrad des Abgaswärmerückgewinnungssystems weiter zu erhöhen und die Nachteile der aus dem Stand der Technik bekannten Systeme zu überwinden.

Erfindungsgemäß wird diese Aufgabe durch einen Verbrennungsmotor mit mindestens einem Brennraum, wobei der Verbrennungsmotor mit seinem Auslass mit einer Abgasanlage verbunden ist, gelöst. In der Abgasanlage ist ein Wärmetauscher eines Abgaswärmerückgewinnungssystems angeordnet, mit welchem die Abwärme des Abgases auf ein Betriebsfluid des Abgaswärmerückgewinnungssystems übertragbar ist. Der Verbrennungsmotor ist ferner mit einem Klimakompressor eines Klimakreislaufs koppelbar. Das Abgaswärmerückgewinnungssystem weist einen weiteren Wärmetauscher auf, in welchem die Abwärme eines verdichteten Kältemittels des Klimakreislaufs auf das Betriebsfluid des Abgaswärmerückgewinnungssystems übertragen wird. Durch die Erwärmung des Betriebsfluids des Abgaswärmerückgewinnungssystems durch die Abwärme des Klimakompressors beziehungsweise des verdichteten Kühlmittels kann zusätzliche Energie in das Abgaswärmerückgewinnungssystem eingebracht werden. Dabei kann sich das Kältemittel in Abhängigkeit von der Verdichtung auf Temperaturen deutlich oberhalb der Kühlwassertemperatur des Verbrennungsmotors erwärmen, wodurch eine stärkere Erwärmung des Betriebsfluids möglich ist. Zudem kann der Leistungsbedarf des Klimakompressors reduziert oder die Kühlleistung erhöht werden, da das verdichtete Kältemittel Wärme auf das Betriebsfluid des Abgaswärmerückgewinnungssystems überträgt und bei der Expansion somit niedrigere Temperatur als ohne Zwischenkühlung erreicht.

Durch die in den abhängigen Ansprüchen aufgeführten Merkmale sind vorteilhafte Verbesserungen und nicht-triviale Weiterentwicklungen des im unabhängigen Anspruch genannten Verbrennungsmotors möglich.

In bevorzugter Ausgestaltung der Erfindung ist vorgesehen, dass der weitere Wärmetauscher in einem Betriebsfluidkreislauf des Abgaswärmerückgewinnungssystems stromabwärts einer Pumpe für das Betriebsfluid und stromaufwärts des vom Abgas des Verbrennungsmotors durchströmten Wärmetauscher angeordnet ist. Durch einen Wärmeeintrag stromabwärts der Pumpe kann die Pumpe ein noch verhältnismäßig kühles Betriebsfluid fördern, dadurch ist die Dichte des Betriebsfluids höher und somit auch der Wirkungsgrad der Förderpumpe. Zudem werden Einbußen an der Förderleistung oder Beschädigungen der Pumpe durch Dampfblasenbildung und damit verbundene Kavitation vermieden.

Erfindungsgemäß ist vorgesehen, dass in einem Betriebsfluidkreislauf des Abgaswärmerückgewinnungssystems eine Expansionskraftmaschine angeordnet ist, über welche ein Motor und/oder Generator antreibbar sind/ist. Durch eine Expansionskraftmaschine, insbesondere eine Turbine, kann die Abwärme des Verbrennungsmotors und die Abwärme des Klimakreislaufs auf einfache Art und Weise nutzbar gemacht werden. Dabei kann die Expansionskraftmaschine zum mechanischen Antrieb eines Nebenaggregats oder des Verbrennungsmotors genutzt werden. Alternativ kann die Expansionskraftmaschine einen Generator antreiben, welcher die Bewegung der Expansionskraftmaschine in elektrische Energie umwandelt. Diese elektrische Energie kann unmittelbar zum Antrieb eines elektrischen Verbrauchers genutzt werden oder in ein Bordnetz eines Kraftfahrzeuges eingespeist beziehungsweise in einer Batterie zwischengespeichert werden.

Erfindungsgemäß ist dabei vorgesehen, dass die Expansionskraftmaschine über eine Leistungsverzweigungseinrichtung wahlweise mit dem Verbrennungsmotor und/oder mit einem elektrischen Antriebsmotor oder Generator koppelbar ist. Dadurch kann alternativ eine Leistungsübertragung auf den Verbrennungsmotor erfolgen, um ein zusätzliches Antriebsmoment auf die Kurbelwelle zu übertragen und somit die Leistung des Verbrennungsmotors zu erhöhen oder den Verbrauch zu minimieren. In Betriebssituationen, in welchen kein direkter Leistungsbedarf besteht, kann die Energie der Expansionskraftmaschine durch den Generator in elektrische Energie gewandelt und in einer Batterie des Bordnetzes zwischengespeichert werden. Dadurch kann der Generator entlastet werden und/oder das Aufladen der Batterie beschleunigt werden. Zudem können elektrische Verbraucher direkt, also ohne Zwischenspeicherung des elektrischen Stroms in der Batterie, versorgt werden, wodurch die benötigte Antriebsleistung für den Generator reduziert werden kann. Dadurch kann der Wirkungsgrad des Verbrennungsmotors erhöht werden.

In einer vorteilhaften Ausführungsform der Erfindung ist vorgesehen, dass in dem Betriebsfluidkreislauf des Abgaswärmerückgewinnungssystems stromabwärts der Expansionskraftmaschine und stromaufwärts einer Pumpe für das Betriebsfluid ein Kondensator angeordnet ist. Durch einen Kondensator kann sichergestellt werden, dass das Betriebsfluid nach Durchströmen der Expansionskraftmaschine wieder sicher in seinen flüssigen Aggregatszustand überführt wird.

In einer vorteilhaften Verbesserung des Abgaswärmerückgewinnungssystems ist vorgesehen, dass der Kondensator einen Kühlmittelzulauf und einen Kühlmittelrücklauf aufweist, welche mit einem Kühlwasserkreislauf des Verbrennungsmotors verbunden sind. Durch einen Anschluss des Kondensators an das Kühlwassersystem des Verbrennungsmotors kann auf einfache Art und Weise ohne zusätzlichen Kühlmittelkreislauf eine effiziente Kühlung des Betriebsfluids erreicht werden, sodass eine Überführung in den flüssigen Aggregatszustand sichergestellt ist. Bevorzugt ist der Kondensator im Kühlwasserkreislauf des Verbrennungsmotors stromabwärts eines Kühlers oder stromaufwärts des Verbrennungsmotors angeordnet, um den Kondensator mit möglichst kühlem Kühlwasser zu durchströmen.

In einer vorteilhaften Weiterentwicklung der Erfindung ist vorgesehen, dass stromabwärts des Kondensators und stromaufwärts der Pumpe ein Vorratsbehälter für das Betriebsfluid angeordnet ist. Durch einen Vorratsbehälter kann ein Beruhigungsvolumen bereitgestellt werden, in dem sich das Betriebsfluid nach Durchströmen des Kondensators sammeln und beruhigen kann. Dadurch ist eine weitere Abkühlung des Betriebsfluids möglich.

Gemäß einer bevorzugten Ausführungsform der Erfindung ist vorgesehen, dass das Betriebsfluid des Abgaswärmerückgewinnungssystem ein flüssiges, organisches Arbeitsmedium, insbesondere ein Alkohol, besonders bevorzugt ein Ethanol oder ein Ethanol-Wasser-Gemisch, ist. Ein organisches Arbeitsmedium kann einen niedrigeren Siedepunkt als Wasser aufweisen.

In weiterer bevorzugter Ausgestaltung der Erfindung ist vorgesehen, dass der Klimakreislauf einen Klimakompressor und einen Kältemittelkondensator aufweist, wobei der weitere Wärmetauscher durch das von dem Klimakompressor verdichtete Kältemittel durchströmt wird, bevor das verdichtete Kältemittel in den Kältemittelkondensator eintritt. Dadurch wird die Wärme des heißen, verdichteten Kältemittels auf das Betriebsfluid des Abgaswärmerückgewinnungssystems übertragen. Dabei kann die gewünschte Abkühlung des Kältemittels dazu genutzt werden, diese Abwärme nicht an die Umwelt zu emittieren, sondern im Abgaswärmerückgewinnungssystem zu nutzen.

In einer vorteilhaften Ausgestaltung des Klimakreislaufs ist vorgesehen, dass der Klimakreislauf stromabwärts des Kältemittelkondensators und stromaufwärts eines Kältemittelverdampfers einen Ausgleichsbehälter aufweist.

In einer bevorzugten Ausführungsform der Erfindung ist vorgesehen, dass das Kältemittel des Klimakreislaufs Kohlenstoffdioxid ist. Kohlendioxid ist als Kältemittel für Klimaanlagen vorteilhaft, da es ungiftig und nicht brennbar ist. Allerdings erfordert Kohlenstoffdioxid eine höhere Verdichtung des Kältemittels, wodurch die Temperaturen des komprimierten Kältemittels steigen. Diese höheren Temperaturen führen zu einem höheren Temperaturgradienten zwischen dem Kältemittel und dem Betriebsfluid des Abgaswärmerückgewinnungssystems, was die Wärmeübertragung erhöht und somit ermöglicht, mehr Wärme in das Abgaswärmerückgewinnungssystem einzubringen. Somit kann die Abwärme des Klimakreislaufs insbesondere bei einer Klimaanlage mit Kohlenstoffdioxid als Kältemittel besonders effizient genutzt werden.

Alternativ ist mit Vorteil vorgesehen, dass das Kältemittel des Klimakreislaufs R1234yf ist. Auch bei bekannten Kältemitteln wie R1234yf werden nach der Kompression im Klimakompressor Temperaturen von mehr als 120 °C erreicht, wodurch auch bei diesen Kältemitteln ein hinreichendes Temperaturgefälle zum Betriebsfluid des Abgaswärmerückgewinnungssystems entsteht.

Erfindungsgemäß wird ein Verfahren zur Abgaswärmerückgewinnung eines solchen Verbrennungsmotors vorgeschlagen, wobei ein Betriebsfluid des Abgaswärmerückgewinnungssystems in einem ersten Verfahrensschritt durch die Abwärme eines verdichteten Kältemittels des Klimakreislaufs und in einem zweiten Verfahrensschritt durch die Abwärme des Abgases des Verbrennungsmotors erhitzt wird. Durch ein solches Verfahren kann die Abwärme des Klimakreislaufs genutzt werden, um zusätzliche Energie in das Abgaswärmerückgewinnungssystem einzuspeisen. Dabei werden in dem Klimakreislauf Temperaturen erreicht, welche oberhalb der Temperatur des Kühlwasserkreislaufs des Verbrennungsmotors liegen, wodurch das Verdampfen des Betriebsfluids begünstigt wird.

In einer vorteilhaften Ausführungsvariante des Verfahrens ist vorgesehen, dass das Kältemittel auf einen Betriebsdruck von mindestens 20 bar, vorzugsweise von mindestens 100 bar, verdichtet wird. Je stärker die Kompression des Kältemittels, desto höher sind die Temperaturen, die nach der Kompression erreicht werden. Insbesondere bei Kohlenstoffdioxid als Kältemittel sind hohe Kompressionsdrücke von 100 bar und mehr notwendig, um eine hinreichende Kühlleistung der Klimaanlage zu realisieren. Gerade bei Kältemitteln, welche so stark verdichtet werden und damit sehr hohe Temperaturen erreichen, ist die Übertragung der Abwärme auf das Betriebsfluid des Abgaswärmerückgewinnungssystems vorteilhaft.

In einer weiteren vorteilhaften Ausgestaltung des Verfahrens ist vorgesehen, dass die Abwärme des verdichteten Kältemittels stromabwärts einer Pumpe auf das Betriebsfluid des Abgaswärmerückgewinnungssystems übertragen wird. Unmittelbar stromabwärts der Pumpe des Klimakreislaufes erreicht das Kältemittel seine höchste Verdichtung und damit verbunden seine höchste Temperatur. Somit besteht hier das größte Potenzial, diese Abwärme nutzbar zu machen und das verdichtete Kältemittel abzukühlen, bevor das Kältemittel durch den Kondensator und den Verdampfer geleitet und entspannt wird.

In einer bevorzugten Ausgestaltung des Verfahrens ist vorgesehen, dass ein Klimakompressor des Klimakreislaufs mittels eines Zugmittels, insbesondere einer Kette oder eines Riemens, von einer rotierenden Welle des Verbrennungsmotors angetrieben wird. Durch ein Zugmittel ist ein einfacher Antrieb des Klimakompressors durch den Verbrennungsmotor möglich. Dabei ist keine zusätzliche Umwandlung der mechanischen Energie in elektrische Energie und zurück notwendig, wodurch die Verlustleistung minimiert werden kann. Alternativ kann der Klimakompressor auch elektrisch angetrieben werden, wobei der elektrische Strom insbesondere durch die Expansionskraftmaschine in dem Abgaswärmerückgewinnungssystem und einem damit verbundenen Generator bereitgestellt werden kann.

Besonders bevorzugt ist dabei, wenn eine schaltbare Kupplung, insbesondere eine Magnetkupplung zwischen dem Riementrieb und dem Klimakompressor vorgesehen ist, wobei der Klimakompressor in einem ersten Betriebszustand der schaltbaren Kupplung von der rotierenden Welle des Verbrennungsmotors angetrieben wird und in einem zweiten Betriebszustand der schaltbaren Kupplung von der rotierenden Welle des Verbrennungsmotors abgekuppelt ist. Dadurch kann der Klimakompressor vom Antriebsstrang entkoppelt werden und die Antriebsleistung reduziert werden, wenn der Klimakompressor abgeschaltet ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen versehen. Es zeigen:
- Figur 1: ein bevorzugtes Ausführungsbeispiel eines Verbrennungsmotors mit einer Abgasanlage, einem Abgaswärmerückgewinnungssystem sowie einem Klimakreislauf;
- Figur 2: ein Diagramm zum Druck in Bezug auf die Enthalpie im Klimakreislauf bei einem erfindungsgemäßen Verbrennungsmotor; und
- Figur 3: ein Ablaufdiagramm zur Durchführung eines erfindungsgemäßen Verfahrens zur Abgaswärmerückgewinnung eines Verbrennungsmotors.

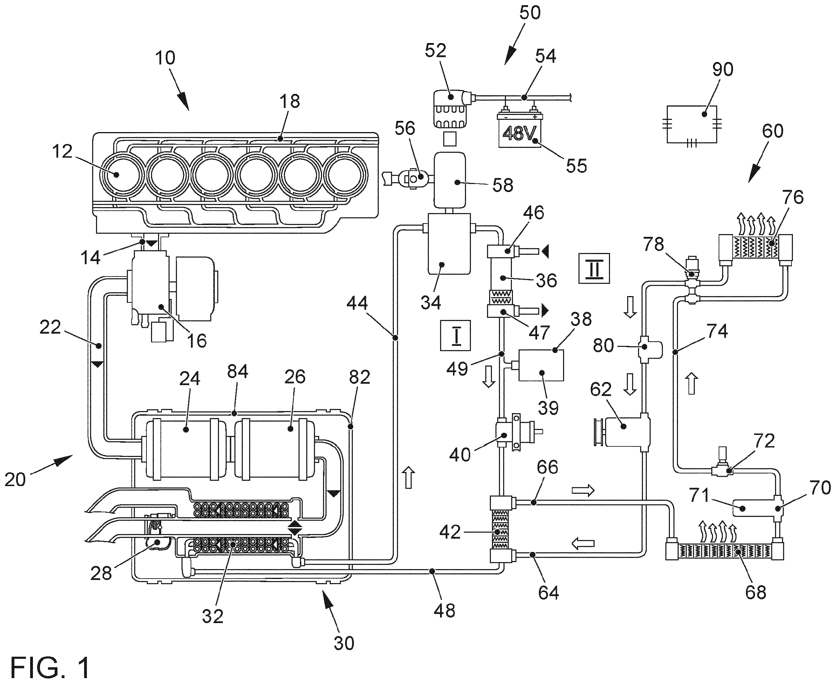

Figur 1 zeigt einen Verbrennungsmotor 10 mit mindestens einem Brennraum 12, welcher zum Antrieb eines Kraftfahrzeuges vorgesehen ist. In Figur 1 ist der Verbrennungsmotor 10 als Sechszylinder-Reihenmotor ausgeführt. Alternativ sind jedoch auch andere Ausführungsformen, vorzugsweise mit 2 - 12 Zylindern, möglich. Der Verbrennungsmotor 10 kann alternativ auch als V-Motor oder Boxermotor ausgeführt werden. Der Verbrennungsmotor 10 weist einen Kühlmittelkreislauf 18 auf, über welchen der Motorblock des Verbrennungsmotors 10 gekühlt wird, um die Abwärme des Verbrennungsmotors 10 abzuführen. Der Verbrennungsmotor 10 ist mit seinem Auslass 14 mit einer Abgasanlage 20 verbunden. Die Abgasanlage 20 umfasst einen Abgaskanal 22, in welchem in Strömungsrichtung eines Abgases des Verbrennungsmotors 10 durch den Abgaskanal 22 eine Turbine eines Abgasturboladers 16 und stromabwärts der Turbine des Abgasturboladers 16 mehrere Abgasnachbehandlungskomponenten 24, 26 sowie ein Wärmetauscher 32 eines Abgaswärmerückgewinnungssystems 30 angeordnet sind. In einer bevorzugten Ausführungsform der Erfindung ist der Verbrennungsmotor 10 als selbstzündender Dieselmotor ausgeführt und die Abgasnachbehandlungskomponenten 24, 26 umfassen einen Oxidationskatalysator, einen NOx-Speicherkatalysator, einen Partikelfilter und/oder einen Katalysator zur selektiven katalytischen Reduktion von Stickoxiden.

Alternativ oder zusätzlich kann die Abgasanlage, insbesondere bei einem Ottomotor, auch einen Drei-Wege-Katalysator oder einen Vier-Wege-Katalysator umfassen. Stromabwärts des Wärmetauschers 32 ist eine Abgasklappe 28 vorgesehen, mit welcher der Abgaskanal 22 zumindest teilweise verschlossen werden kann, um den Abgasgegendruck zu erhöhen. Die Abgasnachbehandlungskomponenten 24, 26 und der Wärmetauscher 32 können als Abgaswärmerückgewinnungsbaugruppe 84 auch in einem gemeinsamen Gehäuse 82 angeordnet werden, um die Montage der Abgasanlage 20 zu vereinfachen. Die Abgasklappe 28 kann ebenfalls in diese Abgaswärmerückgewinnungsbaugruppe 84 integriert werden.

Das Abgaswärmerückgewinnungssystem 30 umfasst neben dem Wärmetauscher 32, welcher auch als Verdampfer 32 für ein Betriebsfluid 39 des Abgaswärmrückgewinnungssystems 30 dient, eine Expansionskraftmaschine 34, einen Kondensator 36, eine Pumpe 40 sowie einen weiteren Wärmetauscher 42, welcher zur Abkühlung eines verdichteten Kältemittels 71 eines Klimakreislaufs 60 dient. Das Abgaswärmerückgewinnungssystem 30 umfasst ferner einen Vorratsbehälter 38 für das Betriebsfluid 39, insbesondere ein organisches Arbeitsmedium, bevorzugt Alkohol oder ein Alkohol-Wasser-Gemisch, besonders bevorzugt Ethanol oder ein Ethanol-Wasser-Gemisch. Der Vorratsbehälter 38 ist über eine Leistung mit der Pumpe 40 verbunden, in welcher das Betriebsfluid 39 verdichtet wird. Das verdichtete Betriebsmedium wird dem weiteren Wärmetauscher 42 zugeführt, wo es die Abwärme eines unter Druck stehenden Kältemittels 71 aufnimmt und über eine Zuführleitung 48 dem Wärmetauscher 32 zuführt. Im Wärmetauscher 32 wird die Abwärme des Abgasstroms des Verbrennungsmotors 10 auf das Betriebsfluid übertragen und überführt das Betriebsfluid in den gasförmigen Aggregatszustand. Der dabei entstehende Dampf wird über eine Dampfleitung 44 der Expansionskraftmaschine 34 zugeführt, welche mit einem Heabrid-Modul 50 in Wirkverbindung steht. Die Expansionskraftmaschine 34 ist mit einer Leistungsverzweigungseinrichtung 58 wahlweise über eine mechanische Antriebswelle 56 mit dem Verbrennungsmotor 10 oder mit einem Motor/Generator 52 zur Erzeugung von elektrischem Strom verbindbar. Der Motor/Generator 52 ist mit einem elektrischen Bordnetz 54 eines Kraftfahrzeuges verbunden und kann die elektrische Energie in einer Batterie 55 zwischenspeichern.

Stromabwärts der Expansionskraftmaschine 34 ist in dem Abgaswärmerückgewinnungssystem 30 ein Kondensator 36 angeordnet, welcher einen Kühlmittelzulauf 46 und einen Kühlmittelrücklauf 47 aufweist und an den Kühlwasserkreislauf 18 des Verbrennungsmotors 10 angeschlossen ist. In dem Kondensator 36 wird das Betriebsfluid des Abgaswärmerückgewinnungssystems 30 wieder in den flüssigen Aggregatzustand überführt, bevor es über eine Rücklaufleitung 49 wieder der Pumpe 40 zugeführt wird.

Der Verbrennungsmotor 10 ist über ein Zugmittel, insbesondere eine Kette oder einen Riemen, mit einem Klimakompressor 62 des Klimakreislaufs 60 koppelbar. Der Klimakreislauf 60 umfasst neben dem Klimakompressor 62 den weiteren Wärmetauscher 62, einen KältemittelKondensator 68, einen Ausgleichsbehälter 70 und einen Kältemittelverdampfer 76. Der Klimakompressor 62 ist über ein Leitung 64 mit dem weiteren Wärmetauscher 42 verbunden, wo das durch den Klimakompressor 62 verdichtete Kältemittel 71 seine Wärme auf das Betriebsfluid 39 des Abgaswärmerückgewinnungssystems 30 überträgt. Der weitere Wärmetauscher 42 ist über eine weitere Leitung 66 mit einem Kältemittel-Kondensator 68 des Klimakreislaufs 60 verbunden. Stromabwärts des Kältemittel-Kondensators 68 ist ein Ausgleichsbehälter 70 vorgesehen, in welchem das Kältemittel 71 bevorratet ist. Stromabwärts des Ausgleichsbehälters 70 ist ein Hochdruck-Ventil 72 vorgesehen. Das Hochdruck-Ventil 72 ist über eine Leitung 74 mit einem Kältemittelverdampfer 76 verbunden, in welchem das Kältemittel 74 entspannt und verdampft wird, wobei dem Kältemittel 71 Energie entzogen wird, sodass sich das Kältemittel 71 stark abkühlt. Diese Kälte wird zur Klimatisierung eines Fahrzeuginnenraums eines Kraftfahrzeuges genutzt. Ferner sind in dem Klimakreislauf ein Ventil 78 sowie ein Dämpfungsvolumen 80 vorgesehen, um das entspannte Kältemittel wieder zu sammeln und dem Klimakompressor 62 zuzuführen.

Der Klimakompressor 62 verdichtet das Kältemittel 71 auf einen Druck von mindestens 20 bar, vorzugsweise von mindestens 100 bar, wobei sich das Kältemittel 71, insbesondere Kohlenstoffdioxid, stark erwärmt. Diese Wärme wird über den weiteren Wärmetauscher 42 auf das Betriebsfluid 39 des Abgaswärmerückgewinnungssystems 30 übertragen, wobei das verdichtete Kältemittel gleichzeitig abgekühlt wird.

Der Verbrennungsmotor 10 steht mit einem Steuergerät 90 in Wirkverbindung, über welches der Klimakreislauf 60 sowie das Abgaswärmerückgewinnungssystem 30 gesteuert werden.

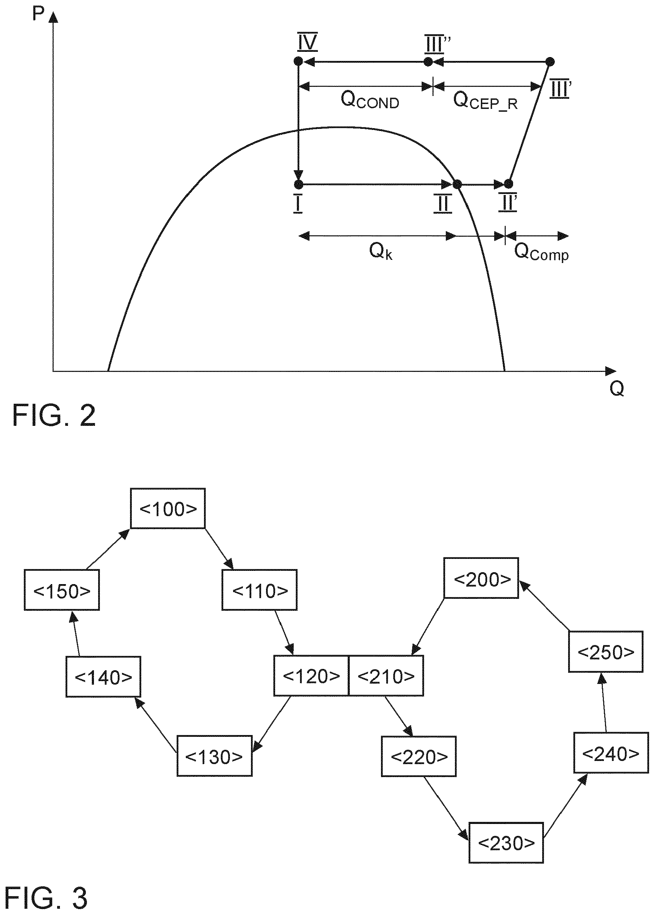

In Figur 2 ist ein Druck-Enthalpie-Diagramm dargestellt, welches die Vorgänge im Klimakreislauf 60 darstellt.

In Figur 3 ist ein Ablaufdiagramm zur Durchführung eines erfindungsgemäßen Verfahrens zur Abgaswärmerückgewinnung dargestellt. In einem ersten Verfahrensschritt <100> wird der Klimakompressor 62 betrieben und das Kältemittel 71 verdichtet. Das verdichtete Kältemittel 71 wird in einem Verfahrensschritt <110> dem weiteren Wärmetauscher 42 zugeführt. In einem Verfahrensschritt <120> wird das verdichtete Kältemittel 71 durch das Betriebsfluid 39 des Abgaswärmerückgewinnungssystems 30 abgekühlt und anschließend dem KältemittelKondensator 68 zugeführt. In einem Verfahrensschritt <130> wird das Kältemittel 71 entspannt und verdampft in einem Verfahrensschritt <140> in dem Kältemittelverdampfer 76. Dabei kühlt sich das Kältemittel 71 ab und überträgt diese Kälte auf einen Luftstrom, der dem Fahrzeuginnenraum des Kraftfahrzeuges zugeführt wird. In einem Verfahrensschritt <150> wird das entspannte Kältemittel wieder gesammelt und dem Klimakompressor 62 zugeführt.

Das Betriebsfluid 39 des Abgaswärmerückgewinnungssystems 30 wird in einem Verfahrensschritt <200> aus dem Vorratsbehälter 38 in den weiteren Wärmetauscher 42 gefördert. Dort überträgt das heiße, komprimierte Kältemittel 71 in einem Verfahrensschritt <210> seine Wärme auf das kältere Betriebsfluid 39, sodass dem Abgaswärmerückgewinnungssystem 30 Energie zugeführt und dem Klimakreislauf 60 entzogen wird. Dabei laufen die Verfahrensschritte <120> und <210> stets gleichzeitig ab. Das erwärmte Betriebsfluid 39 wird dem Wärmetauscher 32 zugeführt, wo es durch den Abgasstrom weiter erhitzt wird und in einem Verfahrensschritt <220> verdampft. Das dampfförmige Betriebsfluid 39 wird über die Dampfleitung 44 der Expansionskraftmaschine 34 zugeführt und treibt diese in einem Verfahrensschritt <230> an. Das Betriebsfluid 39 wird nach Durchströmen der Expansionskraftmaschine 34 dem Kondensator 36 zugeführt, wobei es in einem Verfahrensschritt <240> abgekühlt und wieder vom gasförmigen Aggregatszustand in den flüssigen Aggregatszustand überführt wird. Das abgekühlte Betriebsfluid wird in einem Verfahrensschritt <250> gesammelt und wieder der Pumpe 40 zugeführt, womit sich der Kreislauf des Abgaswärmerückgewinnungssystems schließt.

Durch die zusätzliche Übertragung der Abwärme des verdichteten Kältemittels 71 auf das Betriebsfluid 39 des Abgaswärmerückgewinnungssystems 30 lässt sich der Wirkungsgrad des Verbrennungsmotors 10 steigern, da die abgeführte Wärme genutzt werden kann und weniger Energie zum Antrieb des Klimakompressors durch die Verbrennung von Kraftstoff bereitgestellt werden muss.

### Bezugszeichenliste

- 10: Verbrennungsmotor
- 12: Brennraum
- 14: Auslass
- 16: Abgasturbolader
- 18: Turbine

- 20: Abgasanlage
- 22: Abgaskanal
- 24: erste Abgasnachbehandlungskomponente
- 26: zweite Abgasnachbehandlungskomponente
- 28: Abgasklappe

- 30: Abgaswärmerückgewinnungssystem
- 32: Wärmetauscher / Verdampfer
- 34: Expansionskraftmaschine
- 36: Kondensator
- 38: Vorratsbehälter
- 39: Betriebsfluid WHR (Waste-Heat-Recovery) -System

- 40: Pumpe
- 42: Wärmetauscher / Klima-Kondensator
- 44: Dampfleitung
- 46: Kühlmittelzulauf
- 47: Kühlmittelrücklauf
- 48: Zuführleitung
- 49: Rücklaufleitung

- 50: Heabrid-Modul
- 52: Motor / Generator
- 54: elektrisches Bordnetz
- 55: Batterie
- 56: mechanischer Antrieb
- 58: Leistungsverzweigungseinrichtung

- 60: Klimakreislauf
- 62: Klima-Kompressor
- 64: Leitung
- 66: weitere Leitung
- 68: Kältemittel-Kondensator

- 70: Ausgleichsbehälter
- 71: Kältemittel
- 72: High-Druck-Ventil
- 74: Leitung
- 76: Kältemittelverdampfer
- 78: Ventil

- 80: Dämpfung
- 82: Gehäuse
- 84: AWR-Baugruppe

- 90: Steuergerät

## Patentansprüche

1. Verbrennungsmotor (10) mit mindestens einem Brennraum (12), wobei der Verbrennungsmotor (10) mit seinem Auslass (14) mit einer Abgasanlage (20) verbunden ist, wobei in der Abgasanlage (20) ein Wärmetauscher (32) eines Abgaswärmerückgewinnungssystems (30) angeordnet ist, mit welchem die Abwärme des Abgases auf ein Betriebsfluid (39) des Abgaswärmerückgewinnungssystems (30) übertragbar ist, wobei das Abgaswärmerückgewinnungssystem (30) einen weiteren Wärmetauscher (42) aufweist, in welchem die Abwärme eines verdichteten Kältemittels (71) eines Klimakreislaufs (60) auf das Betriebsfluid (39) des Abgaswärmerückgewinnungssystems (30) übertragbar ist, und wobei in einem Betriebsfluidkreis des Abgaswärmerückgewinnungssystems (30) eine Expansionskraftmaschine (34) angeordnet ist, über welche ein Motor (10) und/oder ein Generator (52) antreibbar ist, **dadurch gekennzeichnet, dass** die Expansionskraftmaschine (34) über eine Leistungsverzweigungseinrichtung (58) wahlweise mit dem Verbrennungsmotor (10) und/oder mit einem elektrischen Antriebsmotor (52) oder Generator (52) koppelbar ist.

2. Verbrennungsmotor (10) nach Anspruch 1, **dadurch gekennzeichnet, dass** der weitere Wärmetauscher (42) in einem Betriebsfluidkreislauf des Abgaswärmerückgewinnungssystems (30) stromabwärts einer Pumpe (40) für das Betriebsfluid (39) und stromaufwärts des vom Abgas des Verbrennungsmotors (10) durchströmten Wärmetauschers (32) angeordnet ist.

3. Verbrennungsmotor (10) nach Anspruch 1 oder 2, **dadurch gekennzeichnet, dass** in dem Betriebsfluidkreislauf des Abgaswärmerückgewinnungssystems (30) stromabwärts der Expansionskraftmaschine (34) und stromaufwärts einer Pumpe (40) für das Betriebsfluid (39) ein Kondensator (36) angeordnet ist.

4. Verbrennungsmotor (10) nach Anspruch 3, **dadurch gekennzeichnet, dass** der Kondensator (36) einen Kühlmittelzulauf (46) und einen Kühlmittelrücklauf (47) aufweist, welche mit einem Kühlwasserkreislauf (18) des Verbrennungsmotors (10) verbunden sind.

5. Verbrennungsmotor (10) nach Anspruch 3 oder 4, **dadurch gekennzeichnet, dass** stromabwärts des Kondensators (36) und stromaufwärts der Pumpe (40) ein Vorratsbehälter (38) für das Betriebsfluid (39) angeordnet ist.

6. Verbrennungsmotor (10) nach einem der Ansprüche 1 bis 5, **dadurch gekennzeichnet, dass** das Betriebsfluid (39) des Abgaswärmerückgewinnungssystems (30) ein Alkohol, insbesondere Ethanol, ist.

7. Verbrennungsmotor (10) nach einem der Ansprüche 1 bis 6, **dadurch gekennzeichnet, dass** der Klimakreislauf (60) einen Klimakompressor (62) und einen Kältemittelkondensator (68) aufweist, wobei der weitere Wärmetauscher (42) durch das von dem Klimakompressor (62) verdichtete Kältemittel (71) durchströmt wird, bevor das verdichtete Kältemittel (71) in den Kältemittelkondensator (68) eintritt.

8. Verbrennungsmotor (10) nach einem der Ansprüche 1 bis 7, **dadurch gekennzeichnet, dass** der Klimakreislauf (60) stromabwärts des Kältemittelkondensators (68) und stromaufwärts eines Kältemittelverdampfers (76) einen Ausgleichsbehälter (70) aufweist.

9. Verbrennungsmotor (10) nach einem der Ansprüche 1 bis 8, **dadurch gekennzeichnet, dass** das Kältemittel (71) des Klimakreislaufs (60) Kohlenstoffdioxid ist.

10. Verfahren zur Abgaswärmerückgewinnung eines Verbrennungsmotor (10) nach einem der Ansprüche 1 bis 9, **dadurch gekennzeichnet, dass** ein Betriebsfluid (39) des Abgaswärmerückgewinnungssystems (30) in einem ersten Verfahrensschritt durch die Abwärme eines verdichteten Kältemittels (71) des Klimakreislaufs (60) und in einem zweiten Verfahrensschritt durch die Abwärme des Abgases des Verbrennungsmotors (10) erhitzt wird.

11. Verfahren zur Abgaswärmerückgewinnung eines Verbrennungsmotors (10) nach Anspruch 10, **dadurch gekennzeichnet, dass** das Kältemittel (71) auf einen Betriebsdruck von mindestens 20 bar, vorzugsweise von mindestens 100 bar, verdichtet wird.

12. Verfahren zur Abgaswärmerückgewinnung eines Verbrennungsmotors (10) nach Anspruch 10 oder 11, **dadurch gekennzeichnet, dass** die Abwärme des verdichteten Kältemittels (71) stromabwärts einer Pumpe (40) auf das Betriebsfluid des Abgaswärmerückgewinnungssystems (10) übertragen wird.

13. Verfahren zur Abgaswärmerückgewinnung eines Verbrennungsmotors (10) nach einem der Ansprüche 10 bis 12, **dadurch gekennzeichnet, dass** ein Klimakompressor (62) des Klimakreislaufs (60) mittels eines Zugmittels, insbesondere einer Kette oder eines Riemens, von einer rotierenden Welle des Verbrennungsmotors (10) angetrieben wird.

## Claims

1. Internal combustion engine (10) with at least one combustion chamber (12), the internal combustion engine (10) being connected by way of its outlet (14) to an exhaust gas system (20), a heat exchanger (32) of an exhaust gas heat recovery system (30) being arranged in the exhaust gas system (20), by means of which heat exchanger (32) the waste heat of the exhaust gas can be transferred to an operating fluid (39) of the exhaust gas heat recovery system (30), the exhaust gas heat recovery system (30) having a further heat exchanger (42), in which the waste heat of a compressed refrigerant (71) of an air conditioning circuit (60) can be transferred to the operating fluid (39) of the exhaust gas heat recovery system (30), and an expansion machine (34) being arranged in an operating fluid circuit of the exhaust gas heat recovery system (30), via which expansion machine (34) a motor (10) and/or a generator (52) can be driven, **characterized in that** the expansion machine (34) can be coupled via a power split device (58) selectively to the internal combustion engine (10) and/or to an electric drive motor (52) or generator (52).

2. Internal combustion engine (10) according to Claim 1, **characterized in that** the further heat exchanger (42) is arranged in an operating fluid circuit of the exhaust gas heat recovery system (30) downstream of a pump (40) for the operating fluid (39) and upstream of the heat exchanger (32) which is flowed through by the exhaust gas of the internal combustion engine (10).

3. Internal combustion engine (10) according to Claim 1 or 2, **characterized in that** a condenser (36) is arranged in the operating fluid circuit of the exhaust gas heat recovery system (30) downstream of the expansion machine (34) and upstream of a pump (40) for the operating fluid (39) .

4. Internal combustion engine (10) according to Claim 3, **characterized in that** the condenser (36) has a coolant feed line (46) and a coolant return line (47) which are connected to a cooling water circuit (18) of the internal combustion engine (10).

5. Internal combustion engine (10) according to Claim 3 or 4, **characterized in that** a storage vessel (38) for the operating fluid (39) is arranged downstream of the condenser (36) and upstream of the pump (40).

6. Internal combustion engine (10) according to one of Claims 1 to 5, **characterized in that** the operating fluid (39) of the exhaust gas heat recovery system (30) is an alcohol, in particular ethanol.

7. Internal combustion engine (10) according to one of Claims 1 to 6, **characterized in that** the air conditioning circuit (60) has an air conditioning compressor (62) and a refrigerant condenser (68), the further heat exchanger (42) being flowed through by the refrigerant (71) which is compressed by the air conditioning compressor (62) before the compressed refrigerant (71) enters the refrigerant condenser (68).

8. Internal combustion engine (10) according to one of Claims 1 to 7, **characterized in that** the air conditioning circuit (60) has an equalizing vessel (70) downstream of the refrigerant condenser (68) and upstream of a refrigerant evaporator (76).

9. Internal combustion engine (10) according to one of Claims 1 to 8, **characterized in that** the refrigerant (71) of the air conditioning circuit (60) is carbon dioxide.

10. Method for exhaust gas heat recovery of an internal combustion engine (10) according to one of Claims 1 to 9, **characterized in that** an operating fluid (39) of the exhaust gas heat recovery system (30) is heated by way of the waste heat of a compressed refrigerant (71) of the air conditioning system (60) in a first method step and by way of the waste heat of the exhaust gas of the internal combustion engine (10) in a second method step.

11. Method for exhaust gas heat recovery of an internal combustion engine (10) according to Claim 10, **characterized in that** the refrigerant (71) is compressed to an operating pressure of at least 20 bar, preferably of at least 100 bar.

12. Method for exhaust gas heat recovery of an internal combustion engine (10) according to Claim 10 or 11, **characterized in that** the waste heat of the compressed refrigerant (71) is transferred downstream of a pump (40) to the operating fluid of the exhaust gas heat recovery system (10).

13. Method for exhaust gas heat recovery of an internal combustion engine (10) according to one of Claims 10 to 12, **characterized in that** an air conditioning compressor (62) of the air conditioning circuit (60) is driven by means of a flexible drive means, in particular a chain or belt, by the rotating shaft of the internal combustion engine (10).

## Revendications

1. Moteur à combustion interne (10) comportant au moins une chambre de combustion (12), le moteur à combustion interne (10) étant connecté par sa sortie (14) à un système d'échappement (20), un échangeur de chaleur (32) d'un système de récupération de chaleur d'échappement (30) étant disposé dans le système d'échappement (20), échangeur de chaleur à l'aide duquel la chaleur perdue du gaz d'échappement peut être transmise à un fluide de fonctionnement (39) du système de récupération de chaleur d'échappement (30), le système de récupération de chaleur d'échappement (30) présentant un autre échangeur de chaleur (42) dans lequel la chaleur perdue d'un réfrigérant comprimé (71) d'un circuit de climatisation (60) peut être transmise au fluide de fonctionnement (39) du système de récupération de chaleur d'échappement (30), et une machine motrice à expansion (34) étant disposée dans un circuit de fluide de fonctionnement du système de récupération de chaleur d'échappement (30), machine par le biais de laquelle un moteur (10) et/ou un générateur (52) peu(ven)t être entraîné(s), **caractérisé en ce que** la machine motrice à expansion (34) peut être accouplée par le biais d'un dispositif de répartition de puissance (58) sélectivement au moteur à combustion interne (10) et/ou à un moteur d'entraînement électrique (52) ou à un générateur (52).

2. Moteur à combustion interne (10) selon la revendication 1, **caractérisé en ce que** l'autre échangeur de chaleur (42) est disposé dans un circuit de fluide de fonctionnement du système de récupération de chaleur d'échappement (30) en aval d'une pompe (40) pour le fluide de fonctionnement (39) et en amont de l'échangeur de chaleur (32) traversé par le gaz d'échappement du moteur à combustion interne (10).

3. Moteur à combustion interne (10) selon la revendication 1 ou 2, **caractérisé en ce qu'**un condenseur (36) est disposé dans le circuit de fluide de fonctionnement du système de récupération de chaleur d'échappement (30) en aval de la machine motrice à expansion (34) et en amont d'une pompe (40) pour le fluide de fonctionnement (39).

4. Moteur à combustion interne (10) selon la revendication 3, **caractérisé en ce que** le condenseur (36) présente une amenée de réfrigérant (46) et un retour de réfrigérant (47), lesquels sont connectés à un circuit d'eau de refroidissement (18) du moteur à combustion interne (10).

5. Moteur à combustion interne (10) selon la revendication 3 ou 4, **caractérisé en ce qu'**un réservoir de stockage (38) pour le fluide de fonctionnement (39) est disposé en aval du condenseur (36) et en amont de la pompe (40).

6. Moteur à combustion interne (10) selon l'une des revendications 1 à 5, **caractérisé en ce que** le fluide de fonctionnement (39) du système de récupération de chaleur d'échappement (30) est un alcool, en particulier de l'éthanol.

7. Moteur à combustion interne (10) selon l'une des revendications 1 à 6, **caractérisé en ce que** le circuit de climatisation (60) présente un compresseur de climatisation (62) et un condenseur de réfrigérant (68), l'autre échangeur de chaleur (42) étant traversé par le réfrigérant (71) comprimé par le compresseur de climatisation (62), avant que le réfrigérant comprimé (71) n'entre dans le condenseur de réfrigérant (68).

8. Moteur à combustion interne (10) selon l'une des revendications 1 à 7, **caractérisé en ce que** le circuit de climatisation (60) présente un réservoir d'expansion (70) en aval du condenseur de réfrigérant (68) et en amont d'un évaporateur de réfrigérant (76).

9. Moteur à combustion interne (10) selon l'une des revendications 1 à 8, **caractérisé en ce que** le réfrigérant (71) du circuit de climatisation (60) est du dioxyde de carbone.

10. Procédé de récupération de chaleur d'échappement d'un moteur à combustion interne (10) selon l'une des revendications 1 à 9, **caractérisé en ce qu'**un fluide de fonctionnement (39) du système de récupération de chaleur d'échappement (30) est réchauffé, dans une première étape de procédé, par la chaleur perdue d'un réfrigérant comprimé (71) du circuit de climatisation (60) et, dans une deuxième étape de procédé, par la chaleur perdue du gaz d'échappement du moteur à combustion interne (10).

11. Procédé de récupération de chaleur d'échappement d'un moteur à combustion interne (10) selon la revendication 10, **caractérisé en ce que** le réfrigérant (71) est comprimé à une pression de fonctionnement d'au moins 20 bars, de préférence d'au moins 100 bars.

12. Procédé de récupération de chaleur d'échappement d'un moteur à combustion interne (10) selon la revendication 10 ou 11, **caractérisé en ce que** la chaleur perdue du réfrigérant comprimé (71) est transmise au fluide de fonctionnement du système de récupération de chaleur d'échappement (10) en aval d'une pompe (40).

13. Procédé de récupération de chaleur d'échappement d'un moteur à combustion interne (10) selon l'une des revendications 10 à 12, **caractérisé en ce qu'**un compresseur de climatisation (62) du circuit de climatisation (60) est entraîné par un arbre rotatif du moteur à combustion interne (10) au moyen d'un lien souple, en particulier d'une chaîne ou d'une courroie.
